## Europäisches Patentamt
## European Patent Office
## Office européen des brevets

(19)

(11) Numéro de publication: **0 121 470**
**B1**

(12) # FASCICULE DE BREVET EUROPÉEN

(45) Date de publication du fascicule du brevet:
**20.05.87**

(51) Int. Cl.⁴: **G 02 B 7/18,** G 02 B 23/02

(21) Numéro de dépôt: **84400612.2**

(22) Date de dépôt: **27.03.84**

(54) Procédé et dispositif de suspension et d'entraînement d'un miroir oscillant de télescope spatial.

(30) Priorité: **30.03.83 FR 8305235**

(43) Date de publication de la demande:
**10.10.84 Bulletin 84/41**

(45) Mention de la délivrance du brevet:
**20.05.87 Bulletin 87/21**

(84) Etats contractants désignés:
**AT BE CH DE GB IT LI NL SE**

(56) Documents cité:
**FR-A-2 431 142**
**US-A-4 030 807**
**US-A-4 365 252**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Croiset, Pierre, 205 Boulevard des Roses, F-06210 Mandelieu (FR)**

(74) Mandataire: **Rinuy, Santarelli, 14, avenue de la Grande Armée, F-75017 Paris (FR)**

EP 0 121 470 B1

## Description

La présente invention concerne un procédé et un dispositif de suspension et d'entraînement en oscillation entre deux positions angulaires extrêmes d'un miroir oscillant de télescope spatial.

Ainsi qu'on le sait, l'exploration optique de différents objets conduit à faire des comparaisons entre deux points de directions voisines. En particulier l'exploration du ciel dans le domaine infrarouge peut se faire par comparaison de la répartition spectrale entre le fond du ciel et la source étudiée. De manière classique une telle comparaison est assurée par modulation de l'image refue par un télescope pointé vers ladite source. Cette modulation est contrôlée de manière à permettre une exploration progressive de la zone étudiée. Le faisceau capté dans chaque position est analysé au moyen d'un spectromètre.

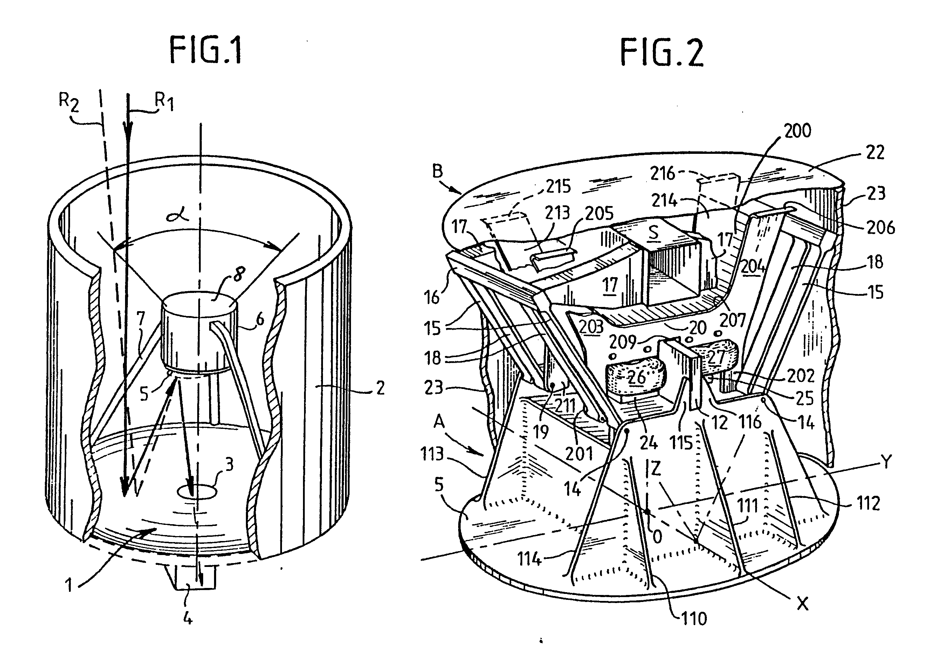

La disposition générale d'un télescope d'observation céleste fondé sur ce principe est rappelée à la figure 1. Un tel télescope comprend essentiellement un miroir principal 1, paraboloïdal, orienté vers la zone céleste à explorer et un écran cryogénique 2 destiné à diminuer le couplage avec les autres sources situées dans l'angle de vue de l'instrument en éliminant toutes les autres (soleil, terre). Le miroir 1 présente en son sommet une ouverture 3 derrière laquelle est placé un analyseur d'images 4. En regard axialement de l'ouverture 3, sensiblement au foyer du miroir 1, est disposé un miroir secondaire 5, convexe, monté oscillant angulairement dans un boîtier 6 lié au miroir principal 1 par un support tripode 7. Le boîtier 6 a un fond radiatif 8 destiné à évacuer vers le vide, selon un angle de vue $\alpha$, la puissance dissipée pour l'entrainement en oscillation du miroir 5. Les rayons incidents R, après réflexion sur le miroir principal sont renvoyés par le miroir secondaire vers l'ouverture 3. Selon l'inclinaison du miroir secondaire, l'analyseur d'images "verra", soit les rayons $R_1$, soit les rayons $R_2$, en provenance de points du ciel différents mais voisins.

Les miroirs oscillants utilisés dans de tels télescopes doivent généralement pouvoir basculer d'une position stable à une autre dans un temps relativement bref par rapport aux temps de maintien dans chacune de ces positions.

Il est à noter que l'axe d'oscillation d'un tel miroir oscillant, perpendiculaire à l'axe du miroir principal, passe de préférence par le sommet du miroir oscillant. Comme ce dernier est convexe il en résulte que ledit axe d'oscillation ne peut être matérialisé.

On sait déjà monter un miroir mobile sur un support de manière à en maintenir l'axe d'oscillation fictif sensiblement fixe. Ainsi que cela est décrit par exemple dans l'article SPIE, vol. 172, Instrumentation in Astronomy III (1979), ou que cela est suggéré dans la demande de brevet français N° 7 930 957 de la Demanderesse, on utilise pour cela des bielles articulées en leurs extrémités au support et au miroir oscillant, orientées de façon à converger vers l'axe d'oscillation recherché.

Dans les télescopes actuellement connus, l'entraînement du miroir oscillant entre ses deux positions de basculement est provoqué par un organe de commande, lié audit support, dont le fonctionnement produit inévitablement des excitations dynamiques dans la structure du télescope, en particulier dans le support tripode. Il en résulte un mauvais contrôle de la position du miroir secondaire et des perturbations parasites de la modulation, ce qui affecte sensiblement les performances du télescope. Des excitations sont dues aux forces, aux couples, ainsi qu'à d'éventuels chocs de butée en fin de course transmis au support.

Certaines structures de suspension de miroirs oscillants ont déjà été proposées en vue de réduire ces excitations, mais il s'est avéré que celles-ci ne permettent pas de réduire simultanément les excitations linéaires dues aux forces, et les excitations angulaires liées aux couples. Il subsiste le plus souvent des excitations transversales. En outre, lorsque l'entraînement en oscillation est d'origine électromagnétique, on sait mal asservir l'alimentation des éléments actifs pour éviter les chocs en fin de basculement et il faut prévoir des amortisseurs qui entraînent des pertes d'énergie.

L'invention a pour objet principal de réduire, voire supprimer, simultanément, les excitations linéaires et angulaires précitées. Elle se préoccupe également, pour une moindre part, en cas de commande électromagnétique, d'alimenter les éléments actifs de façon à éviter tout choc en fin de course.

L'invention propose ainsi un procédé de suspension et d'entraînement en oscillation entre deux positions angulaires extrêmes, d'un miroir oscillant de télescope spatial, caractérisé en ce que l'on commande les déplacements angulaires du miroir oscillant autour de son axe d'oscillation à partir d'une masse auxiliaire montée oscillante autour dudit axe entre deux positions angulaires extrêmes et que l'on stocke momentanément de l'énergie potentielle lorsque le miroir et la masse auxiliaire se rapprochent, en opposition de phase, de leurs positions extrêmes.

En cas de commande électomagnetique asservie, l'invention préconise de produire une force électromagnétique de répulsion en fin de course pour éviter les chocs.

L'invention propose par ailleurs un dispositif de suspension et d'entraînement entre deux positions angulaires extrêmes d'un miroir oscillant de télescope spatial, ledit miroir étant monté sur un support au moyen de barres de liaison convergeant vers l'axe d'oscillation du miroir et les déplacements angulaires dudit miroir étant commandés par un organe de commande, caractérisé en ce qu'il comporte une masse auxiliaire montée oscillante sur le support autour dudit axe d'oscillation au moyen de barres de liaison convergeant vers ce dernier, l'organe de commande étant porté pour partie par la masse auxiliaire et pour partie par le miroir, le miroir et la masse auxiliaire étant dotés de récupérateurs d'énergie transformant pour moment l'énergie cinétique en énergie potentiells avant que ces derniers n'arrivent en butée.

Compte tenu de ce que, selon l'invention, les efforts appliqués sur le miroir oscillant pour l'entraîner en basculement sont exercés à partir d'une masse auxiliaire mobile, montée de façon comparable au miroir, autour du même axe d'oscillation, avec des caractéristiques dynamiques avantageusement semblables, les efforts subis par réaction par ladite masse donnent lieu au sein du support à des forces et des couples qui compensent au moins partiellement les forces et les couples transmis par le miroir ou réflecteur.

Dans un mode de réalisation préféré de l'invention le stockage d'énergie potentielle en chaque position extrême de basculement se fait sous forme élastique; de façon avantageuse, les barres de liaison sont flexibles et sont encastrées dans le support, voire en font partie. En outre la masse auxiliaire et le réflecteur sont dotés de préférence de fréquences propres sensiblement égales, choisies de manière à ce que les périodes associées soient sensiblement quatre fois les temps de basculement recherchés.

Le dispositif selon l'invention présente avantageusement un plan de symétrie passant par l'axe d'oscillation, ce qui conduit à une meilleure fixité de l'axe d'oscillation et une meilleure compensation des forces et des couples dans le support. En outre, les barres de liaison sont regroupées en deux plans contenant l'axe d'oscillation.

L'invention préconise tout particulièrement que la commande en entraînement soit électromagnétique, de manière à supprimer les frottements entre le réflecteur et la masse auxiliaire, et éviter les chocs avec des pertes minimales d'énergie. Les éléments actifs associés à chaque position de butée, en l'absence d'éléments passifs, sont de préférence alimentes en alternance avec une interruption pendant une partie au moins du basculement. En variante, le courant d'attraction subit une inversion en fin de course. En variante, en présence d'éléments passifs, les éléments actifs ne servent qu'à provoquer les basculements.

D'autres objets et avantages de l'invention ressortent de la description qui suit, donnée à titre d'exemple non limitatif, en regard des dessins annexés sur lesquels:

la figure 1 est un schéma de principe d'un télescope spatial;

la figure 2 est une vue en perspective avec arrachements d'un dispositif de suspension et d'entraînement en oscillation selon l'invention avec une commande électromagnétique sans éléments passifs;

la figure 3 est une demie vue en coupe transversale du dispositif de la figure 2, selon un plan de symétrie perpendiculaire à l'axe d'oscillation du miroir;

la figure 4 est un schéma de principe d'un dispositif selon l'invention, selon une variante;

la figure 5 est une vue de détail en coupe d'un organe électromagnétique de commande selon une variante de l'invention;

la figure 6 est une vue de détail en coupe d'un organe électromagnétique de commande selon une autre variante de l'invention;

la figure 7 est un graphique représentant l'évolution au cours du temps des courants d'excitation de l'organe électromagnétique de commande des figures 2 et 3 et de la position angulaire correspondante du miroir;

la figure 8 est un graphique représentant l'évolution, pendant les périodes de transition, d'un courant d'excitation de l'organe électromagnétique de commande, de la position et de la vitesse angulaires du réflecteur;

la figure 9 est un graphique analogue à la figure 7, correspondant aux organes de commande des figures 5 et 6;

la figure 10 est un schéma logique de l'alimentation de l'organe de commande électromagnétique du dispositif de la figure 2; et

la figure 11 est le diagramme de fonctionnement associé.

Les exemples de réalisation décrits ci-après se rapportent au domaine spatial, mais pourraient aisément s'adapter à des applications terrestres. Ces dispositifs ont été définis en fonction des impératifs indiqués ci-après à titre d'exemple:

- la fréquence de basculement est de l'ordre de 10 Hz;

- la durée du basculement est de l'ordre d'un dixième de la durée de chaque alternance;

- l'axe d'oscillation du miroir passe par son sommet, et le débattement angulaire de ce dernier est de 30' de part et d'autre d'une position médiane.

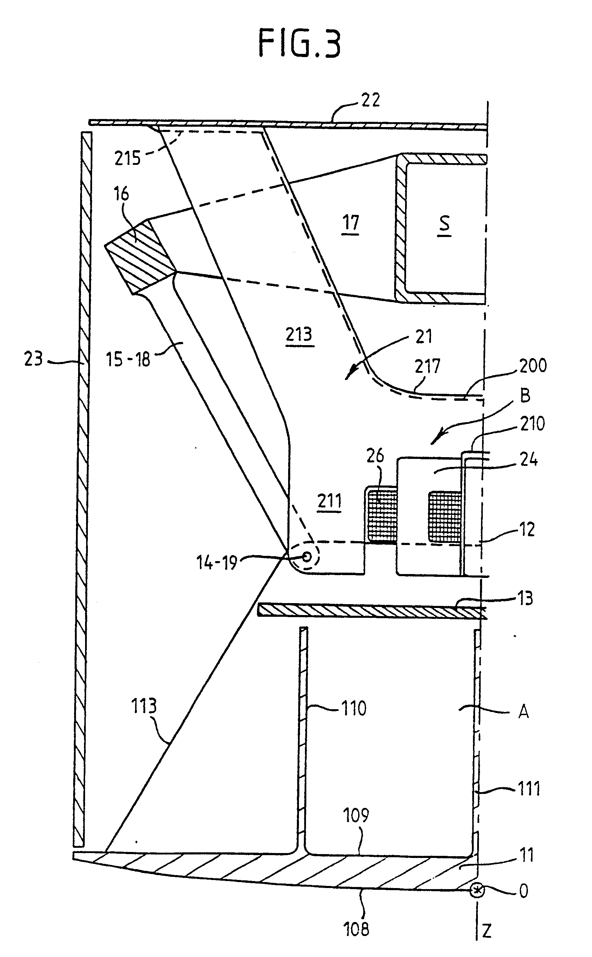

Le dispositif de suspension et d'entraînement illustré par les figures 2 et 3 se décompose en deux ensembles A et B liés à une poutre support S.

Le premier ensemble mobile A comprend essentiellement le miroir secondaire 5 dont la face convexe 108 est réfléchissante et dont la face arrière 109 est sensiblement plane. Son axe Z reste sensiblement confondu avec l'axe du miroir principal non représenté. En son sommet passe un axe X sensiblement confondu avec l'axe d'oscillation recherché, et perpendiculaire à ce dernier, un axe Y qui définit avec l'axe Z un plan de symétrie de l'ensemble du dispositif. Les axes X et Z définissent un plan de symétrie du dispositif lorsque celui-ci est au repos.

Le miroir 5 est rigidifié par deux familles perpendiculaires de voiles solidaires dans la masse ou par assemblage. Dans l'exemple considéré il y a trois voiles 110 à 112 parallèles à l'axe X et deux voiles 113 et 114 légèrement plus grands quileur sont perpendiculaires. Des derniers présentent chacun une paire d'épaulements en regard 115 et 116 qui enserrent latéralement une plague ou palette parallélipipédique 12 en fer doux s'étendant longitudinalement entre les voiles 113 et 114 parallèlement aux axes X et Z. Un écran d'isolation thermique 13, faisant également partie de l'ensemble A, s'étend entre les deux voiles 113 et 114 sous la palette 12 parallèlement aux axes X et Y.

Les voiles 113 et 114, de forme globalement trapézoïdale, comportent dans leurs coins supérieurs (figures 2 et 3) des perforations pour réception d'organes d'articulation 14 traversant les extrémités libres de barres 15, au nombre de quatre dans l'exemple représenté, qui convergent vers l'axe d'oscillation X. Ces barres sont solidaires, par encastrement par exemple, de poutres 16 fixées par des bras 17 à la poutre support S qui est liée à distance aux pieds d'un support tel que le tripode 7 de la figure 1. Les organes d'articulation 14 sont parallèles à l'axe X tandis que les barres 15 sont flexibles perpendiculairement à l'axe X.

Près des barres 15 sont fixées aux poutres 16, par encastrement par exemple, d'autres barres 18, qui leur sont avantageusement semblables. Leurs extrémités libres sont traversées parallèlement à l'axe X par d'autres organes d'articulation 19, de préférence alignés sensiblement avec les organes 14, destinés à la suspension de l'ensemble B ou masse auxiliaire.

L'ensemble B comporte deux plaques de liaison 20 et 21 parallèles aux voiles 113 et 114, par lesquelles il est suspendu aux barres 18. Dans l'exemple de la figure 2, les plagues 20 et 21 sont plus rapprochées que les voiles 113 et 114.

Les plaques 20 et 21 ont une forme assimilable grossièrement à un H et sont reliées entre elles par un voile continu 200 parallèle à l'axe X. Elles présentent vers l'ensemble A, de part et d'autre de la palette 12, deux pieds 201 et 202, 211 et 212 séparés par des échancrures 209, 210 de même forme mais légèrement plus grands que la section de la palette 12. Elles présentent à l'opposé du miroir 5 deux prolongements 203 et 204, 213 et 214 séparés par de lages échancrures 207, 217 traversées par la poutre support S. Les plaques sont pliées en fin de ces prolongements à angle droit de manière à former des pattes de fixation 205, 206, 215 et 216 pour réception d'un fond radiatif 22 perpendiculaire à l'axe Z, sensiblement circulaire, et de même taille que le mutoir 8, ledit fond évacue l'énergie dissipée vers l'espace, par rayonnement, ce qui limite la puissance de l'actuateur pour une température limite donnée. Un écran 23, solidaire du support S, sensiblement cylindrique, s'étend sans contact entre le miroir et le fond, et vise à éviter tout rayonnement vers l'écran cryogénique dont est généralement doté le miroir principal.

Entre les pieds 201 et 211, 202 et 212 des plaques s'étendent deux barreaux profilés en C en fer doux, 24 et 25 dont les creux sont en regard de la palette 12. Des bobines 26 et 27 entourent ces barreaux au niveau de leurs creux pipendiculairement à l'axe Z. On peut également disposer une demi-bobine sur chaque branche du C. Les bobines sont connectées de façon connue mais non représentée à une alimentation extérieure. La plaque d'isolation 13 masque de préférence la totalité de ces barreaux et bobines vis à vis du miroir 5 de manière à éviter tout rayonnement vers ce dernier.

Les plaques 20 et 21 sont par contre bonnes conductrices de la chaleur de manière à pouvoir évacuer vers le fond radiatif la puissance calorifique dissipée dans les bobines.

Les organes d'articulation 14 et 19 et les extrémités correspondantes des barres 15 et 18 sont de préférence réalisés en matériaux adaptés à résister sans grippage au vide spatial. Quant à la poutre support S et le tripode associé, ils sont suffisamment rigides pour résister sans dommages aux excitations dynamiques pouvant résulter du lancement, de la mise en orbite ou des manoeuvres du satellite portant le télescope.

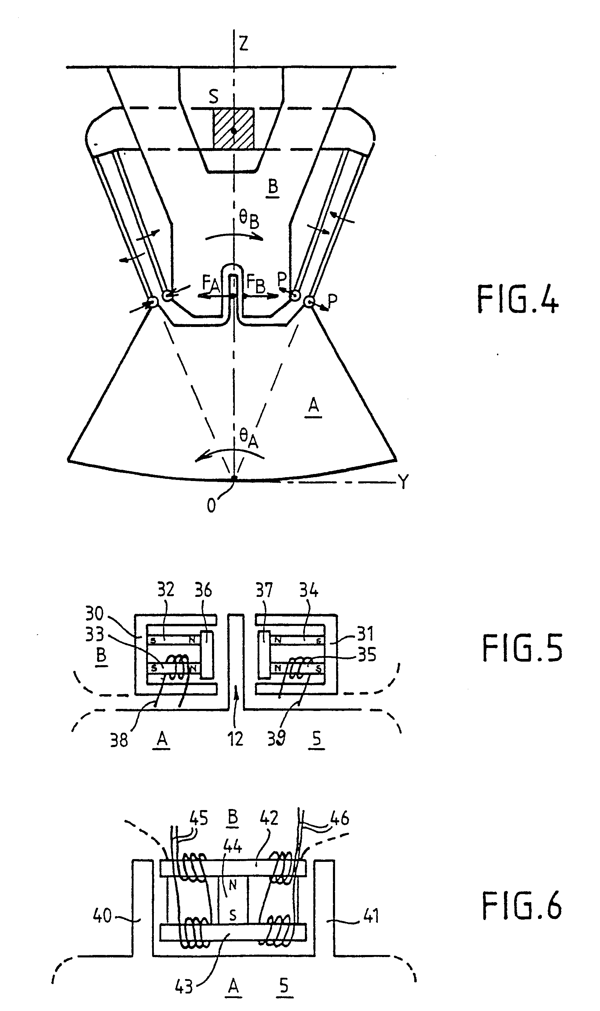

Le démarrags du mouvement d'oscillation ou de basculement des ensembles A et B résulte du passage dans l'une des bobines d'un courant électrique, dans la bobine 26 par exemple. Les lignes d'induction canalisées par le barreau 24 et la palette 12 tendent à provoquer le rapprochement relatif de ces derniers de façon à réduire la reluctance du circuit d'induction que ces lignes parcourent. Ainsi qu'on le sait, l'attraction réciproque entre palette et barreau est inversement proportionnelle au carré de l'entrefer. Selon le principe de l'action et de la réaction, ce rapprochement tend à faire tourner les deux ensembles A et B, en sens inverses (voir les flèches de la figure 4) autour de l'axe X.

Par mesure de clarté les barres 15 et 18 de la figure 4 sont décalées angulairement autour de l'axe X.

Compte tenu de leur flexibilité les barres 15 et 18 se courbent selon les flèches de la figure 4, et exercent sur les ensembles A et B des forces de rappel P qui tendent à s'opposer à la rotation de ces derniers. Ces forces sont sensiblement proportionnelles aux flèches des barres et sont perpendiculaires à ces dernières. La raideur de ces barres est choisie de manière à ce que ces forces de rappel soient, en butée, à peine inférieures à l'attraction des électro-aimants. Les ensembles A et B restent ainsi en butée tant que la bobine precitée est alimentée, les barres constituant alors des récupérateurs d'énergie potentielle ayant transformé l'énergie cinétique des ensembles lors de leur demi-basculement. Dès que l'alimentation de cette bobine cesse, un basculement complet vers l'autre butée a lieu, avec restitution puis récupération par les barres d'énergie potentielle: il en résulte qu'il suffit d'une énergie électrique limitée, plus faible qu'au démarrage, pour entretenir les oscillations ou les basculements.

De manière générale les ensembles A et B sont montés de préférence de manière à posséder grâce aux barres, des fréquences propres sensiblement égales choisies en fonction du temps de basculement recherché, 100 Hz dans le cas présent. Comme dans l'exemple représenté les barres 15 et 18 sont sensiblement identiques, et sont donc de même raideur, la condition précitée revient à l'égalité des moments d'inertie des ensembles A et B par rapport à l'axe X.

L'égalité des inerties des ensembles A et B implique, du fait de leurs interactions, l'égalité des rotations $\theta_A$ et $\theta_B$ de ces ensembles par rapport à l'axe X. Comme les barres 15 et 18 ont même raideur, les forces P exercées par ces dernières sont de même module, les barres 15 créant des forces opposées à celles créées par les barres 18.

Si l'on analyse maintenant les contraintes appliquées par réaction au support, on constate tout d'abord que ces dernières sont localisées aux extrémités des barres. Compte tenu de ce que les barres sont appariées et que lesdites extrémités sont alignées et soumises à des forces opposées, on vérifie que les forces et les couples appliqués au support sont sensiblement nuls, de sorte que le principal objet de l'invention est bien atteint.

Il est à noter que cette compensation résulte principalement de ce que les efforts d'entraînement sont exercés sur l'ensemble réflecteur A à partir d'une masse auxiliaire B oscillante. Les autres conditions géométriques ou dynamiques énoncées précédemment ne visant qu'à améliorer cette compensation jusqu'à la rendre complète ou presque. Des impératifs extérieurs peuvent, le cas échéant, obliger à se contenter d'une compensation partielle.

Il est précisé par ailleurs que le stockage d'énergie potentielle peut se faire de façon élastique (barres élastiques, ou montage d'éléments de rappel de tout type), mais d'autres formes d'énergie potentielle peuvent intervenir. Quelle que soit la forme de stockage de l'énergie potentielle, la condition d'égalité des fréquences propres du miroir et de ses annexes, et de la masse auxiliaire B est avantageuse. L'intérêt d'un tel stockage d'énergie potentielle est de réduire la puissance consommée (dans un rapport 10 par rapport à un dispositif sans récupération), et donc la puissance dissipée sous forme de chaleur. Ce dernier point est crucial pour les applications spatiales où l'évacuation de la chaleur est plus difficile que dans l'atmosphère, ne pouvant se faire que par conduction et rayonnement, mais sans convéction.

L'organe de commande électromagnétique des figures 2 et 3 est composé d'éléments actifs uniquement, complétés par des armatures en fer doux pour refermer les lignes d'induction.

Les figures 5 et 6 illustrent deux variantes de réalisation mettant en oeuvre des éléments passifs pour le maintien des ensembles en butée et des éléments actifs pour les basculements seulement. Il n'y a plus de position de repos entre les positions extrêmes de butée. Ces variantes présentent en commun que les bobines sont alimentées, au début de chaque basculement, de manière à affaiblir l'attraction des éléments passifs sur une palette liée au miroir 5 en dessous de la force de rappel exercée par les barres.

Dans la variante de la figure 5, une palette 12, comme précédemment, est associée au miroir 5 tandis que sur la masse auxiliaire B sont montées des armatures 30 et 31 en fer doux C, un peu plus grandes que les barreaux 24 et 25 des figures 2 et 3, à l'intérieur desquelles sont disposés des aimants permanents 32 et 33, 34 et 35, dont les pôles N sont orientés vers la palette centrale 12. Des plaques 36 et 37 en fer doux sont appliquées contre ces pôles N en vue de provoquer sur la palette une attraction aussi uniforme que possible. Ces plaques 36 et 37 définissent avec les branches des armatures 30 et 31 des entrefers toujours supérieurs à ceux existant entre ces même plaques et la palette 12 de manière à obliger les lignes d'induction à se refermer au travers de la palette plutôt que directement. Autour d'un aimant 33, 35 de chaque paire est disposé un enroulament 38, 39 connecté, de manière classique mais non représentée, à une source de courant de manière à ce qu'un passage de courant y provoque un champ magnétique tendant à s'opposer à celui des aimants: l'attraction devient inférieure à la tension des barres élastiques et libère ainsi la palette. Il ne faut pas, bien sûr, que ce champ magnétique puisse désaimanter les aimants qui doivent donc présenter un fort champ coercitif.

Dans la variante de la figure 6, l'ensemble A du miroir 5 porte deux palettes 40 et 41 en fer doux entre lesquelles sont disposées, portées par l'ensemble B, deux plaques 42 et 43 en fer doux, perpendiculaires à l'axe Z. Entre ces plaques est enserré un aimant parmanent 44 aimanté parallèlement à l'axe Z, selon une configuration de H couché. Ces plaques 42 et 43 définissent avec les palettes 40 et 41 deux circuits de part et d'autre da l'aimant 44. Deux enrouleménts doubles 45 at 46 sont montés de part et d'autre de l'aimant 44 autour des extrémités en regard des plaques. Ces enroulements sont, comme précédemment, connectés à une source d'alimentation de manière à ce qu'un courant réduise le flux traversant la palette associée.

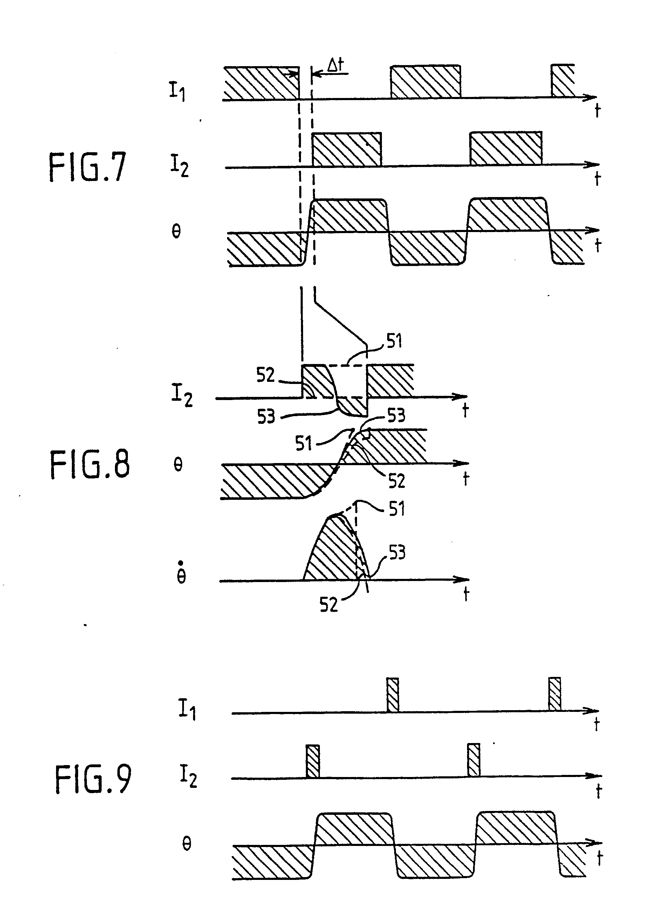

Las figures 7 à 9 illustrent les conditions d'alimantation des divers éléments passifs, après le lancement des oscillations, et leurs affets sur la position, voire la vitesse angulaire du miroir.

Les figures 7 et 8 se rapportent à l'organe de commande électromagnétique des figures 2 et 3. Elles présentent l'évolution des courants d'alimentation $I_1$ et $I_2$ des bobines correspondant à chacune des positions de butée.

La palette 12 reste collée près d'un bobine tant que le courant $I_1$, continu, qui la traverse est maintenu. Dès que ce courant est interrompu les barres tendent à faire basculer la palette vers l'autre bobine. La palette et les circuits magnétiques sont avantageusement garnis d'une couche amagnétique de manière à éviter tout magnétisme rémanent dès l'interruption du courant.

Selon une première variante de fonctionnement, le courant d'alimentation $I_2$ de

l'autre bobine cesse d'être nul après un retard Δt correspondant au temps de basculement, défini par la fréquence propre des ensembles A et B. Cela est illustré par la figure 7 et détaillé par les courbes pointillées 52 de la figure 8. Compte tenu des pertes lors du stockage ou de la restitution d'énergie par les barres, lors du basculement, l'énergie stockée par les barres n'est pas suffisante pour amener la palette 12 contre l'armature de cette seconde bobine: le contact n'a lieu que lorsqu'un courant $I_2$ commence à passer dans cette bobine, ce qui peut conduire à un choc à peine sensible puisque la vitesse en butée est faible. Selon une sous-variante non représentée, on commence à alimenter cette seconde bobine un peu avant la fin de l'intervalle Δt de manière à compenser en douceur l'énergie dissipée.

Les courbes pointillées 51 correspondant à l'absence de retard entre l'alimentation d'une bobine vis à vis de la coupure de courant dans la première. Elles correspondant à un choc très net. Selon une variante intermédiaire représentée selon les courbes continues 53, on alimente la seconde bobine sans retard par rapport à la première bobine puis la sans du courant est inversé en fin de course pour amortissement du choc, puis redevient positif.

La constante de temps des circuits des bobines doit être suffisamment faible pour que le courant soit pratiquement établi lorsque l'entrefer est minimal (nul dans le cas considéré).

Lorsque le fonctionnement implique un choc en fin de course, il est souhaitable de prévoir l'amortissament de ce dernier, grâce, par exemple, à un choix adapté du matériau amagnétique précité. Dans le cas des applications spatialas il est avantageux que cette couche amagnétique soit isolante thermiquement, ajourée de préférence, de manière à minimiser le flux calorifique transmis par conduction au miroir.

Pour le maintien en oscillation des ensembles A et B, le courant d'excitation des bobines, grâce au stockage élastique, est bien inférieur au courant de démarrage puisqu'il ne s'agit plus guère que de compenser les pertes d'énergie lors de chaque basculement. Cela explique la forte reduction correspondante de la puissance consommée, et de la puissance dissipée à évacuer, par rapport à un dispositif sans stockage élastique.

Les impulsions d'alimantation d'un organe de commande électromagnétique à aimants parmanents conduisant à une consommation électrique encore plus faible puisque les éléments actifs ne participent pas au maintian en butée des ensembles et n'interviennent que lors des basculements (voir figure 9). La durée de l'impulsion peut être inférieure, parfois sensiblement, au temps de basculement. Le choix des caractéristiques de ces impulsions est conditionné essentiellement par les caractéristiques de l'aimant et par la relation réelle entre les forces magnétiques et la largeur des entrefers. Un cas très défavorable pour un premier dimensionnement est de considérer qu'il faut exercer une force égale mais opposée à l'attraction du ou des aimant(s). Selon une sous-variante, des impulsions de répulsion sont données en fin de course.

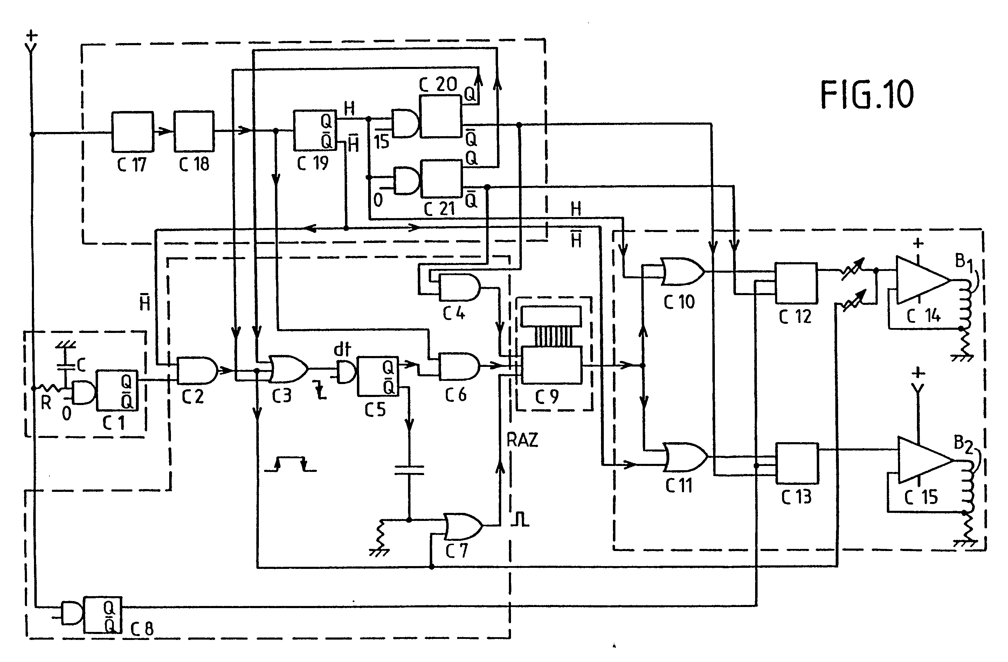

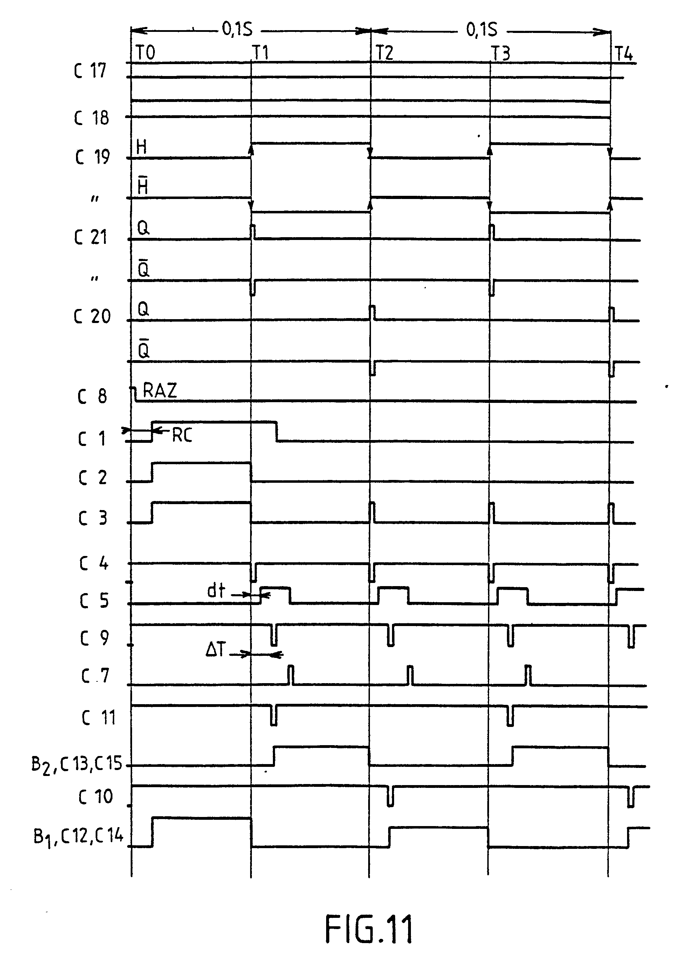

Les figures 10 et 11 illustrent un schéma logique d'alimentation de bobines B1 et B2, et le fonctionnement associé, dans le cas d'un retard ΔT entre les excitations, en alternance, desdites bobines (voir figure 7).

Le circuit de la figure 10 comporte essentiellement un circuit de démarrage, un circuit de base de temps, un circuit de traitement et de remise à zéro, un circuit de comptage et un circuit de commutation et d'alimentation.

Le circuit de démarrage comporte essentiellement un circuit logique C1 précédé par un circuit RC. Il est destiné à produire une seule fois un courant d'appel dans la bobine B1, pour attirer la palette vers cette dernière, sensiblement plus fort que celui qui suffit pour le maintien en oscillation ou en basculement. Le circuit de base de temps est destiné à délivrer des signaux à 10 Hz et 100 kHz à partir d'une horloge C17 pilotée par quartz à 1 MHz, grâce à des diviseurs C18 et C19. Ce dernier alimente deux monostables C20 et C21. Ce circuit de base de temps délivre des signaux de service envoyés, d'une part, au circuit de commutation et d'alimentation et, d'autre part, au circuit de traitement et de remise à zéro (C2 à C7). Ce dernier alimente le circuit de comptage constitué par un compteur C9 dont la durée de fonctionnement est déterminée par le câblage d'une carte d'affichage de prépositionnement. Le circuit de commutation et d'alimentation des bobines B1 et B2 comprend essentiellement des portes logiques OU, C10 et C11, deux bascules C12 et C13, et deux amplificateurs opérationnels C14 et C15.

Le circuit de base de temps délivre en permanence des signaux d'horloge et des signaux en créneaux. Le diviseur C19 délivre des tensions complémentaires H et H̄ (voir figure 11). A partir de la tension H les monostables C20 et C21 délivrent des tensions de type impulsion avec leurs compléments destinés, aux changements d'état des bascules C12 et C13, au déclenchement des cycles de comptage, et au chargement parallèle du compteur.

Lors de la mise sous tension de l'ensemble du circuit (instant $T_0$ sur la figure 11), le circuit logique C8 génère une impulsion de remise à zéro du compteur C9 et des bascules C12 et C13: aucun courant ne traverse les bobines.

Avec un retard fixé par R et C le circuit C1 délivre une impulsion qui se prolongera au-delà de $I_1$. Le retard précité est juste suffisant pour permettre les remises à zéro précitées par le circuit C8. Cette impulsion combinée avec H̄ dans la porte logique ET C2 détermine la durée d'établissement du courant d'appel dans la bobine B1 (de $T_0$ + RC à $T_1$).

Le circuit C5 est adapté, à partir de $T_1$, sur le front descendant de H̄ transmis par C2 et C3, à fournir sur sa sortie Q, avec un léger retard dt, une impulsion dont la durée détermine le temps de comptage. Cette impulsion, dont la durée est supérieure à la capacité du compteur C9 multipliée par la durée du pas de comptage, "ouvre" la porte C6 aux impulsions de comptage à 100 kHz.

Le temps de comptage est déterminé par le temps qui s'écoule entre le moment où l'on cesse d'alimenter une bobine et celui où l'on établit un courant sur l'autre (B1 en l'instant $T_1 + \Delta T$).

En utilisant, par exemple, un compteur 8 bits prépositionnable avec chargement parallèle, $\Delta T$ pourra prendre toute valeur prédéterminée choisie entre 1 et 512 fois la période de comptage (10 µs). Le chargement est commandé par le circuit C4 en fonction des sorties Q des monostables aux temps $T_1$, $T_2$, $T_3$,...

Au temps $T_1$ i $\Delta T$, le compteur fournit sur sa sortie "retenue" une impulsion qui, combinée avec H̄ en C11, provoque le changement d'état de la bascule C13.

La bobine B2 est ainsi sous tension et attire la palette.

A toutes les fins de comptage il y a remise à zéro du compteur C9 par la sortie Q̄ de C5 et C7.

La bobine B2 reste sous tension jusqu'en $T_2$ où il y a, d'une part, changement d'état de C13 en raison de l'impulsion fournie par la sortie Q de C20, ce qui entraîne la coupure d'alimentation de la bobine B2, d'autre part, chargement parallèle du compteur C9 par la sortie Q̄ du circuit C20 au travers de C4, et d'autre part encore, début d'un cycle de comptage sous le contrôle de la sortie Q du circuit C20.

Au temps $T_2 + \Delta T$ l'impulsion de sortie du compteur C9, combinée en C10 avec H, provoque le changement d'état de la bascule C12, ce qui établit un courant dans la bobine B1. La palette revient vers cette dernière.

La bobine B1 reste alimentée jusqu'en $T_3$ où commence un cycle analogue à celui qui vient d'être décrit à partir de $T_2$: la bobine B2 est alimentée entre $T_3 + \Delta T$ et $T_4$; et ainsi de suite, selon une fréquence de basculement de 10 Hz.

Les exemples de réalisation qui viennent d'être décrits ne sont pas limitatifs et de nombreuses variantes, par combinaison des précédentes, ou nouvelles, peuvent être proposées par l'homme de l'art sans sortir du cadre de l'invention, qui est défini essentiellement par la mise en oeuvre d'une masse auxiliaire B ainsi qu'il ressort des revendications annexées.

Ainsi le nombre de barres, et leur disposition, peut être adapté en fonction des impératifs, d'encombrement notamment. Ainsi, par exemple, des barres voisines peuvent faire partie d'une même pièce, ou encore les poutres 16 peuvent former une même pièce avec les barres qui leur sont solidaires. Les organes de commande électromagnétiques, lorsque l'on choisit ce type d'entraînement, peuvent présenter des proportions relatives très diverses entre éléments actifs et passifs, si tant est que ces derniers sont

présents. Le détail de leur nombre de leur disposition et de leur alimentation est à choisir par l'homme de l'art. Des éléments passifs (mais non actifs) pourraient être portés par l'ensemble A. La valeur minimale des entrefers n'est pas nécessairement nulle.

Des proportions quelconques peuvent être obtenues entre temps de basculement et temps de maintien.

Il peut y avoir ou non une position de repos, médiane ou non.

Les exemples représentés sont des modes de réalisation préférés qui permettent d'assurer de manière optimale la suppression des excitations dynamiques tant linéaires qu'angulaires. Ces cas idéaux, qui ne sont pas limitatifs, sont à adapter en fonction des possibilités et des besoins de l'homme de l'art.

## Revendications

1. Procédé de suspension et d'entraînement en oscillation entre deux positions angulaires extrêmes, d'un miroir oscillant de télescope spatial, caractérisé en ce que l'on commande les déplacements angulaires du miroir oscillant (5) autour de son axe d'oscillation (X) à partir d'une masse auxiliaire (B) montée oscillante autour dudit axe (X) entre deux positions angulaires extrêmes et que l'on stocke momentanément de l'énergie potentielle lorsque le miroir et la masse auxiliaire se rapprochent, en opposition de phase, de leurs positions extrêmes.

2. Procédé selon la revendication 1, caractérisé en ce que l'on stocke de l'énergie potentielle sous forme élastique.

3. Procédé selon la revendication 1 ou la revendication 2, caractérisé en ce que l'on fait basculer le miroir oscillant (5) entre ses positions extrêmes penddant un temps égal à une fraction de la demi-période des oscillations, et que l'on maintient en position le miroir entre chaque basculement.

4. Procédé selon la revendication 3, caractérisé en ce que l'on commande les déplacements angulaires du miroir oscillant de manière électromagnétique.

5. Procédé selon la revendication 1, caractérisé en ce que l'on met en oeuvre des éléments actifs (26, 27) pour le maintien du miroir oscillant (5) dans chacune de ses positions extrêmes.

6. Procédé selon la revendication 5, caractérisé en ce qu'on cesse toute alimentation des éléments actifs pendant une partie au moins des temps de basculement.

7. Procédé selon la revendication 4, caractérisé en ce que l'on met en oeuvre au moins un élément passif (32-35, 44) pour le maintien en position extrême du miroir oscillant.

8. Procédé selon l'une quelconque des revendications 4 à 7, caractérisé en ce que l'on produit une force de répulsion en fin de basculement.

9. Dispositif de suspension et d'entraînement entre deux positions angulaires extrêmes d'un miroir oscillant de télescope spatial, ledit miroir étant monté sur un support au moyen de barres de liaison convergeant vers l'axe d'oscillation du miroir et les déplacements angulaires dudit miroir étant commandés par un organe de commande, caractérisé en ce qu'il comporte une masse auxiliaire (B) montée oscillante sur le support (S) autour dudit axe d'oscillation (X) au moyen de barres de liaison (18) convergeant vers ce dernier, l'organe de commande (12, 24-27, 30-39, 40-46) étant porté pour partie par la masse auxiliaire (B) et pour partie par le miroir (5), le miroir (5) et la masse auxiliaire (B) étant dotés de récupérateurs d'énergie (15, 18) aptes à tranformer pour un moment l'énergie cinétique en énergie potentielle avant que ces derniers n'arrivent en butée.

10. Dispositif selon la revendication 9, caractérisé en ce que le miroir (5) appartient à un ensemble mobile (A) et que cet ensemble (A) et la masse auxiliaire (B) ont des fréquences propres sensiblement égales, qui definissent le temps de basculement entre les deux positions angulaires extrêmes.

11. Dispositif selon la revendication 9 ou la revendication 10, caractérisé en ce que les récupérateurs d'énergie sont les barres de liaison elles-mêmes (15, 18), lesquelles sont flexibles dans des plans perpendiculaires à l'axe d'oscillation et sont solidaires du support (S).

12. Dispositif selon la revendication 11, caractérisé en ce que les barres de liaison (15, 18) du miroir et de la masse auxiliaire sont groupées par paires.

13. Dispositif selon la revendication 12, caractérisé en ce que les paires (15, 18) de barres de liaison font partie d'une même pièce.

14. Dispositif selon l'une quelconque des revendications 9 à 13, caractérisé en ce que les barres de liaison (15, 18) sont regroupées en deux plans convergeant vers l'axe d'oscillation (X).

15. Dispositif selon l'une quelconque des revendications 9 à 14, caractérisé en ce que le miroir (5) et la masse auxiliaire (B) admettent une position médiane dans laquelle le dispositif, le miroir (5) et le support (S) admettent un plan de symétrie (X, Z) passant par l'axe d'oscillation (X).

16. Dispositif selon l'une quelconque des revendications 11 à 13, caractérisé en ce que les jarres sont identiques.

17. Dispositif selon la revendication 16, caractérisé en ce que les barres ont même raideur et que l'ensemble mobile (A) et la masse auxiliaire (B) ont des moments d'inertie par rapport à l'axe d'oscillation (X) sensiblement égaux.

18. Dispositif selon l'une quelconque des revendications 9 à 17, caractérisé en ce que l'organe de commande comporte, associé au miroir (5), au moins un barreau (12, 40, 41) en fer doux parallèle é l'axe d'oscillation (X), et, portés par la masse auxiliaire (B), des éléments électromagnétiques actifs (26, 27, 38, 39, 45, 46).

19. Dispositif selon la revendication 18, caractérisé en ce que la masse auxiliaire (B) comporte des plaques conductrices de la chaleur (20, 21) liées à un fond radiatif (22) adaptés à coopérer pour évacuer la puissance dissipée dens les éléments actifs.

0. Dispositif selon la revendication 18 ou la revendication 19, caractérisé en ce qu'un écran thermique (23) est disposé sans contact entre le miroir (5) et le fond radiatif (22).

21. Dispositif selon l'une quelconque des revendications 18 à 20, caractérisé en ce qu'un écran thermique (13) découple radiativement le miroir (5) et les éléments actifs.

22. Dispositif selon l'une quelconque des revendications 18 à 21, caractérisé en ce que les éléments actifs sont des bobines (26, 27) entourant des armatures en C en fer doux (24, 25) disposées, avec des entrefers, de part et d'autre d'un barreau (12) en fer doux lié au miroir (5).

23. Dispositif selon la revendication 22, caracterise en ce que les éléments actifs sont alimentés par un circuit logique adapté à alimenter en courant continu, chaque bobine en alternance, avec un temps de retard entre la coupure d'alimentation d'une bobine et le début d'alimentation de l'autre.

24. Dispositif selon l'une quelconque des revendications 18 à 21, caractérisé en ce qu'il comporte au moins un élément passif (32-35, 44) pour maintien en butée du miroir (5) et de la masse auxiliaire (B), dont les lignes d'induction se referment au travers d'armatures (30, 31; 42, 43) portées par la masse auxiliaire (B) et au moins un barreau (12; 40, 41) lié au miroir (5), les éléments actifs (38, 39, 45, 46) entourant des branches des circuits ainsi definis et étant adaptés, lors d'un passage de courant, à s'opposer à ces lignes d'induction.

25. Dispositif selon l'une quelconque des revendications 18 à 24, caractérisé en ce que l'organe de commande comporte, de part et d'autre des entrefers qui y sont définis, une couche amagnétique.

26. Dispositif selon la revendication 25, caractérisé en ce que les couches amagnétiques sont ajourées.

## Patentansprüche

1. Verfahren zur Aufhängung und zum Antreiben eines schwingenden Spiegels eines astronomischen Fernrohrs in Schwingbewegung zwischen zwei äußersten Winkelpositionen, dadurch gekennzeichnet, daß die Winkelbewegungen des schwingenden Spiegels (5) um seine Schwingachse (X) ausgehend vor einer Hilfsmasse (B) gesteuert werden, die um die genannte Achse (X) zwischen zwei äußersten Winkelpositionen schwingend angeordnet ist, und daß potentielle Energie vorübergehend gespeichert wird, wenn sich der Spielgel und die Hilfsmasse in entgegengesetzter Phase ihren äußersten Positionen nähern.

2. Verfahren nach Anspruch 1, dadurch gekennzeichnet, daß potentielle Energie in elastischer Form gespeichert wird.

3. Verfahren nach Anspruch 1 oder 2, dadurch gekennzeichnet, daß der schwingende Spiegel (5) während eine Zeit zwischen seinen äußersten Positionen gekippt wird, die einem Bruchteil der Halbperiode der Schwingungen gleich ist, und daß der Spiegel zwischen jedem Kippen in Position gehalten wird.

4. Verfahren nach Anspruch 3, dadurch gekennzeichnet. daß die Winkelbewegungen des schwingenden Spiegels elektromagnetisch gesteuert werden.

5. Verfahren nach Anspruch 1, dadurch gekennzeichnet, daß für das Festhalten des schwingenden Spiegels (5) in jeder seiner äußersten Positionen Aktivelemente (26, 27) eingesetzt werden.

6. Verfahren nach Anspruch 5, dadurch gekennzeichnet, daß während wenigstens eines Teiles der Kippzeiten jede Speisung der Aktivelemente unterbleibt.

7. Verfahren nach Anspruch 4, dadurch gekennzeichnet, daß für das Halten des schwingenden Spiegels in äußerster Position zumindest ein Passivelement (32-35, 44) eingesetzt wird.

8. Verfahren nach einem der Ansprüche 4 bis 7, dadurch gekennzeichnet, daß am Ende des Kippens eine Rückstoßkraft erzeugt wird.

9. Vorrichtung zur Aufhängung und zum Antreiben eines schwingenden Spiegels eines astronomischen Fernrohrs in Schwingbewegung zwischen zwei äußersten Winkelpositionen, wobei der Spiegel mittels gegen die Schwingachse des Spiegels konvergierender Verbindungsstangen auf einer Stütze montiert ist, und die Winkelbewegungen des genannten Spiegels von einem Steuerorgan gesteuert werden, dadurch gekennzeichnet, daß sie eine mittels gegen die Schwingachse konvergierender Verbindungstangen (18) schwingend um die genannte Schwingachse (X) auf der Stütze (S) angeordnete Hilfsmasse (B) aufweist, wobei das Steuerorgan (12, 24-27, 30-39, 40-46) zum Teil durch die Hilfsmasse (B) und zum Teil durch den Spiegel (5) getragen wird, wobei der Spiegel (5) und die Hilfsmasse (B) mit Energierückgewinnungseinrichtungen (15, 18) versehen sind, die, bevor sie in Anschlag kommen, für einen Moment die kinetische Energie in potentielle Energie umwandeln können.

10. Vorrichtung nach Anspruch 9, dadurch gekennzeichnet, daß der Spiegel (5) zu einer beweglichen Einheit (A) gehört, und daß diese Einheit (A) und die Hilfsmasse (B) im wesentlichen gleiche Eigenfrequenzen haben, die die Kippzeit zwischen den beiden äußersten Winkelpositionen definieren.

11. Vorrichtung nach Anspruch 9 oder 10, dadurch gekennzeichnet, daß die Energierückgewinnungseinrichtungen die Verbindungsstangen selbst (15, 18) sind, die in senkrechten Ebenen zur Schwingachse flexibel und mit der Stütze (S) fest verbunden sind.

12. Vorrichtung nach Anspruch 11, dadurch gekennzeichnet, daß die Verbindungsstangen (15, 18) des Spiegels und der Hilfsmasse paarweise gruppiert sind.

13. Vorrichtung nach Anspruch 12, dadurch gekennzeichnet, daß die Verbindungsstangenpaare (15, 18) Teil ein- und desselben Stückes sind.

14. Vorrichtung nach einem der Ansprüche 9 bis 13, dadurch gekennzeichnet, daß die Verbindungsstangen (15, 18) gruppenweise in zwei gegen die Schwingachse (X) konvergierenden Ebenen angeordnet sind.

15. Vorrichtung nach einem der Ansprüche 9 bis 14, dadurch gekennzeichnet, daß der Spiegel (5) und die Hilfsmasse (B) eine mittlere Position erlauben, in der die Vorrichtung, der Spiegel (5) und die Stütze (S) eine durch die Schwingachse (X) gehende Symmetrieebene (X, Z) zulassen.

16. Vorrichtung nach einem der Ansprüche 11 bis 13, dadurch gekennzeichnet, daß die Stangen identisch sind.

17. Vorrichtung nach Anspruch 16, dadurch gekennzeichnet, daß die Stangen die gleiche Steifigkeit aufweisen, und daß die bewegliche Einheit (A) und die Hilfsmasse (B) in bezug auf die Schwingachse (X) im wesentlichen gleiche Trägheitsmomente aufweisen.

18. Vorrichtung nach einem der Ansprüche 9 bis 17, dadurch gekennzeichnet, daß das Steuerorgan wenigstens einen mit dem Spiegel (5) verbundenen, zur Schwingachse (X) parallelen Weicheisenstab (12, 40, 41) sowie von der Hilfsmasse (B) getragene elektromagnetische Aktivelemente (26, 27, 38, 39, 45, 46) aufweist.

19. Vorrichtung nach Anspruch 18, dadurch gekennzeichnet, daß die Hilfsmasse (B) mit einem Abstrahlungsboden (22) verbundene Wärmeleitungsplatten (20, 21) aufweist, die zum Abführen der in den Aktivelementen zerstreuten Energie zusammenarbeiten können.

20. Vorrichtung nach Anspruch 18 oder 19, dadurch gekennzeichnet, daß zwischen dem Spiegel (5) und dem Abstrahlungsboden (22) ohne Kontakt mit diesen ein Wärmeschirm (23) angeordnet ist.

21. Vorrichtung nach einem der Ansprüche 18 bis 20, dadurch gekennzeichnet, daß ein Wärmeschirm (13) den Spiegel (5) und die Aktivelemente strahlungsmäßig entkuppelt.

22. Vorrichtung nach einem der Ansprüche 18 bis 21, dadurch gekennzeichnet, daß die Aktivelemente Spulen (26, 27) sind, die C-förmige Weicheisenkerne (24, 25) umgeben, die mit Spalten beidseits eines mit dem Spiegel (5) verbundenen Weicheisenstabes (12) angeordnet sind.

23. Vorrichtung nach Anspruch 22, dadurch gekennzeichnet, daß die Aktivelemente von einem logischen Kreis gespeist werden, der die Spulen abwechselnd mit Gleichstrom speist, wobei zwischen der Unterbrechung der Speisung

einer Spule und dem Beginn der Speisung der anderen Spule eine Verzögerungszeit vorgesehen ist.

24. Vorrichtung nach einem der Ansprüche 18 bis 21, dadurch gekennzeichnet, daß sie wenigstens ein Passivelement (32-35, 44) aufweist, um den Spiegel (5) und die Hilfsmasse (B) in Anschlag zu halten, deren Induktionslinien sich über von der Hilfsmasse (B) getragene Anker (30, 31; 42, 43) sowie wenigstens einen mit dem Spiegel (5) verbundenen Stab (12; 40, 41) schließen, wobei die Aktivelemente (38, 39, 45, 46) Zweige der so gebildeten Kreise umschließen und eingerichtet sind, beim Durchgang von Strom diesen Induktionslinien entgegenzuwirken.

25. Vorrichtung nach einem der Ansprüche 18 bis 24, dadurch gekennzeichnet, daß das Steuerorgan beidseits von in ihm gebildeten Spalten eine nicht magnetische Schicht aufweist.

26. Vorrichtung nach Anspruch 25, dadurch gekennzeichnet, daß die nicht magnetischen Schichten durchbrochen sind.


## Claims

1. Process for the suspension, and entrainment in oscillation between two extreme angular positions, of an oscillating mirror of a space telescope, characterized in that the angular displacements of the oscillating mirror (5) about its axis of oscillation (X) are controlled by means of an auxiliary mass (B) mounted to oscillate about the said axis (X) between two extreme angular positions, and in that potential energy is stored momentarily when the mirror and the auxiliary mass approach their extreme positions in phase opposition.

2. Process according to Claim 1, characterized in that potential energy is stored in elastic form.

3. Process according to Claim 1 or Claim 2, characterized in that the oscillating mirror (5) is caused to rock between its extreme positions during a time equal to a fraction of the half-period of the oscillations, and in that the mirror is maintained in position between successive rockings.

4. Process according to Claim 3, characterized in that the angular displacements of the oscillating mirror are controlled by electromagnetic means.

5. Process according to Claim 1, characterized in that active elements (26, 27) are utilized in order to maintain the oscillating mirror (5) in each one of its extreme positions.

6. Process according to Claim 5, characterized in that any supply to the active elements is ceased during at least a part of the rocking times.

7. Process according to Claim 4, characterized in that at least one passive element (32-35, 44) is utilized in order to maintain the oscillating mirror in its extreme position.

8. Process according to any one of Claims 4 to 7, characterized in that a force of repulsion is generated on termination of rocking.

9. Device for the suspension, and entrainment between two extreme angular positions, of an oscillating mirror of a space telescope, the said mirror being mounted on a support by means of linking bars converging towards the axis of oscillation of the mirror, and the angular displacements of the said mirror being controlled by a control element, characterized in that the device includes an auxiliary mass (B) mounted to oscillate on the support (S) about the said axis of oscillation (X) by means of linking bars (18) converging towards the latter, the control element (12, 24-27, 30-39, 40-46) being carried in part by the auxiliary mass (B) and in part by the mirror (5), the mirror (5) and the auxiliary mass (B) being equipped with energy regenerators (15, 18) capable of converting the kinetic energy into potential energy for a moment before these regenerators arrive at their abutment.

10. Device according to Claim 9, characterized in that the mirror (5) belongs to a movable assembly (A), and in that this assembly (A) and the auxiliary mass (B) have inherent frequencies which are substantially equal and which define the time of rocking between the two extreme angular positions.

11. Device according to Claim 9 or Claim 10, characterized in that the energy regenerators are the linking bars themselves (15, 18), which are flexible in planes perpendicular to the axis of oscillation and form a solid unit with the support (S).

12. Device according to Claim 11, characterized in that the linking bars (15, 18) of the mirror and of the auxiliary mass are grouped in pairs.

13. Device according to Claim 12, characterized in that the pairs (15, 18) of linking bars form part of a single component.

14. Device according to any one of Claims 9 to 13, characterized in that the linking bars (15, 18) are grouped in two planes converging towards the axis of oscillation (X).

15. Device according to any one of Claims 9 to 14, characterized in that the mirror (5) and the auxiliary mass (B) adopt a median position in which the device, the mirror (5) and the support (S) adopt a plane of symmetry (X, Z) passing through the axis of oscillation (X).

16. Device according to any one of Claims 11 to 13, characterized in that the bars are identical.

17. Device according to Claim 16, characterized in that the bars have the same rigidity, and in that the movable assembly (A) and the auxiliary mass (B) have substantially equal moments of inertia with respect to the axis of oscillation (X).

> 18. Device according to any one of Claims 9 to 17, characterized in that the control element comprises, associated with the mirror (5), at least one soft iron bar (12, 40, 41) parallel to the axis of oscillation (X), and, carried by the auxiliary mass (B), active electromagnetic elements (26, 27, 38, 39, 45, 46).

19. Device according to Claim 18, characterized in that the auxiliary mass (B) includes heat- conducting plates (20, 21) connected to a radiative base (22), which plates are adapted to cooperate for the purpose of removing the power dissipated in the active elements.

20. Device according to Claim 18 or 19, characterized in that a thermal screen (23) is disposed without contact between the mirror (5) and the radiative base (22).

21. Device according to any one of Claims 18 to 20, characterized in that a thermal screen (13) radiatively decouples the mirror (5) and the active elements.

22. Device according to any one of Claims 18 to 21, characterized in that the active elements are coils (26, 27) surrounding soft iron C-frames (24, 25) disposed, with airgaps, on both sides of a soft iron bar (12) connected to the mirror (5).

23. Device according to Claim 22, characterized in that the active elements are supplied by a logic circuit adapted to supply each coil alternately with direct current, with a delay time between the discontinuance of supply of one coil and the commencement of supply of the other.

24. Device according to any one of Claims 18 to 21, characterized in that it includes at least one passive element (32-35, 44) to maintain in abutment the mirror (5) and the auxiliary mass (B), the lines of induction of which are closed through frames (30, 31; 42, 43) carried by the auxiliary mass (B) and at least one bar (12; 40, 41) connected to the mirror (5), the active elements (38, 39, 45, 46) surrounding branches of circuits thus defined and being adapted, in the course of a passage of current, to resist these lines of induction.

25. Device according to any one of Claims 18 to 24, characterized in that the control element includes, on both sides of the airgaps which are defined there, a non-magnetic layer.

26. Device according to Claim 25, characterized in that the non-magnetic layers are perforated.

# FIG.1

# FIG.2

0 121 470

# FIG.3

FIG.4

FIG.5

FIG.6

FIG.7

$I_1$

$\Delta t$

t

$I_2$

t

$\theta$

t

FIG.8

51

52

$I_2$

53

t

53

51

$\theta$

52

t

51

$\dot{\theta}$

53

52

t

FIG.9

$I_1$

t

$I_2$

t

$\theta$

t

FIG.10

FIG.11